# EUROPEAN PATENT SPECIFICATION

(11) **EP 3 232 866 B1**
(45) Date of publication and mention of the grant of the patent: **06.11.2019**
(21) Application number: 15868761.6
(22) Date of filing: 30.09.2015
(51) Int. Cl.: A47J 31/00, A47J 31/18, A47J 31/44

(54) **COFFEE BREWING VESSEL USING STEAM**
KAFFEEBRÜHBEHÄLTER MIT VERWENDUNG VON DAMPF
RÉCIPIENT D'INFUSION DE CAFÉ UTILISANT DE LA VAPEUR

(30) Priority: 15.12.2014 US 201462091764 P
(43) Date of publication of application: 25.10.2017
(73) Proprietor: Kostas, Polychronis E., Winnipeg, Manitoba R3P 1R1 (CA)
(72) Inventor: Kostas, Polychronis E., Winnipeg, Manitoba R3P 1R1 (CA)
(74) Representative: Franke, Dirk
(86) International application number: PCT/CA2015/050983
(87) International publication number: WO 2016/095019

(56) References cited:
- EP-A1- 2 494 871
- EP-A1- 2 494 871
- WO-A1-2006/000962
- DE-U1-202007 004 535

## Description

### FIELD OF THE INVENTION

The present invention relates to a brewing vessel having a receptacle for receiving a coffee mixture therein and a steam chamber which at least partially surrounds the receptacle so as to be arranged to receive steam from a steam generating appliance, for example an espresso coffee machine with a steam outlet, for heating the coffee mixture in the receptacle of the coffee brewing vessel.

### BACKGROUND

When brewing a Turkish or Greek coffee it is typical to provide a receptacle into which a coffee mixture of ground coffee and water is placed. The receptacle is then heated over a flame or a stove element to brew the coffee mixture. Use of conventional brewing receptacles is time consuming and requires regular mixing to prevent burning the mixture.

In attempts to automate the brewing of Turkish or Greek coffee, various devices have been proposed which typically include a receptacle with an integral electric element incorporated therein. Examples of Turkish coffee makers of this type are disclosed in the following published patent documents: WO2011002421, CN203619345, RU132978, EP2481328, and WO2007077105. The electric elements in the prior art however are typically only located at the bottom of the vessel and do not serve to evenly distribute heat within the receptacle so that the heating process remains time consuming and may produce an undesirable flavor.

The European patent application EP 2 494 871 A1 relates to an infusion barrel for a beverage making device including a body, a steam pipe and a check valve, wherein the body has a space and the steam pipe is eccentrically located in the space and has a chamber which has an air inlet and multiple air outlets located in upright direction.

### SUMMARY OF THE INVENTION

According to a first aspect of the invention there is provided a coffee brewing vessel for use with a steam generating appliance, as specified in claim 1.

Preferably the steam chamber includes an annular portion which extends about a full circumference of the receptacle.

The steam chamber may further include a bottom portion which spans a bottom side of the receptacle.

Preferably both the inner wall and the outer wall each include a side wall portion which is generally cylindrical and a bottom wall portion spanning a bottom side of the side wall portion so as to define the annular portion of the steam chamber between the side wall portions of the inner and outer wall and the bottom portion of the steam chamber between the bottom sides of the inner and outer wall.

Preferably the steam chamber spans substantially a full height of the receptacle.

The steam chamber may further define a generally helical path between the steam inlet and the steam outlet, for example by providing a helical member supported between the inner wall and the outer wall so as to define the generally helical path.

Preferably the steam inlet and the steam outlet communicate with the steam chamber at opposing locations relative to one another, for example opposing top and bottom ends of the steam chamber respectively such that the steam inlet communicates with the steam chamber adjacent to the bottom end thereof and the steam outlet communicates with the steam chamber adjacent to the top end thereof.

The steam outlet may comprise a tubular member having an exhaust opening which is directed downwardly.

When the steam inlet and the steam outlet communicate with the steam chamber at a first side of the receptacle, preferably a handle is supported on the outer wall at a second side of the receptacle which is diametrically opposite from the first side.

Preferably the coffee brewing vessel is used in combination with an auxiliary coffee making appliance having a steam outlet by using an adapter which is adapted for releasable connection in communication between the steam outlet of the auxiliary coffee making appliance and the steam inlet of the coffee brewing vessel.

According to a second aspect of the present invention there is provided a method of brewing coffee as specified in claim 15.

Preferably the coffee brewing vessel is used in combination with an auxiliary steam generating appliance having a steam outlet, in which the method further includes introducing the steam into the steam inlet by directing steam from the steam outlet of the auxiliary steam generating appliance to the steam inlet of the coffee brewing vessel.

Preferably the steam is directed through the steam chamber along a generally helical path.

By providing a vessel receiving steam therein, the resulting vessel is relatively simple in construction and of low cost as compared to the manufacture of electrical heating elements. Furthermore, the vessel can be usable with many existing forms of coffee appliances having a steam outlet which is commonly used for making cappuccinos and lattes and the like. By directing steam from such an existing appliance into the steam chamber of the vessel of the present invention, even heat can be distributed about substantially the full boundary of the receptacle to uniformly heat the coffee quickly while optimally preserving a desired flavor of the finished brewed coffee.

One embodiment of the invention will now be described in conjunction with the accompanying drawings in which:

### BRIEF DESCRIPTION OF THE DRAWINGS

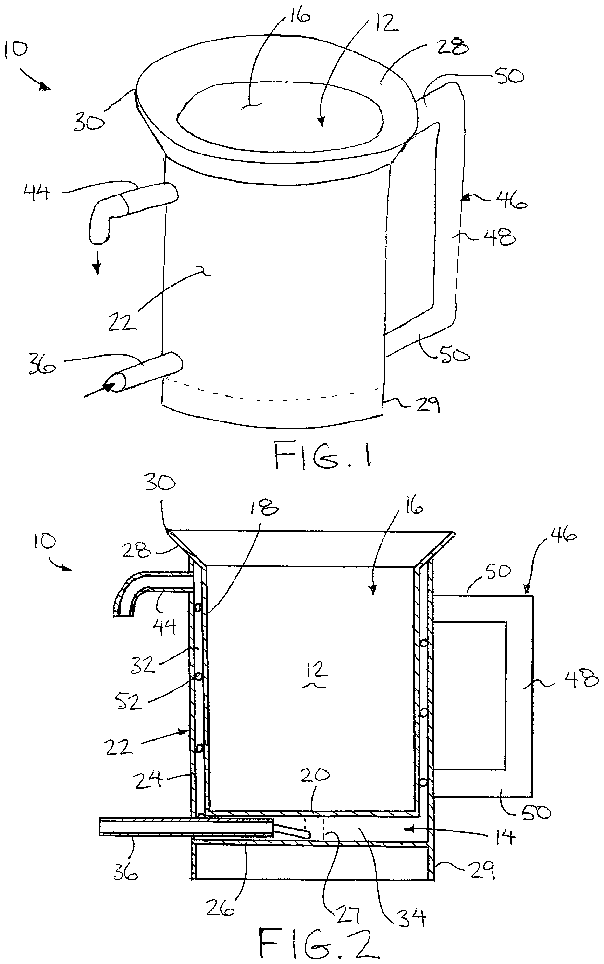

Figure 1 is a perspective view of the coffee brewing vessel;
Figure 2 is a vertical cross section of the coffee brewing vessel according to Figure 1;

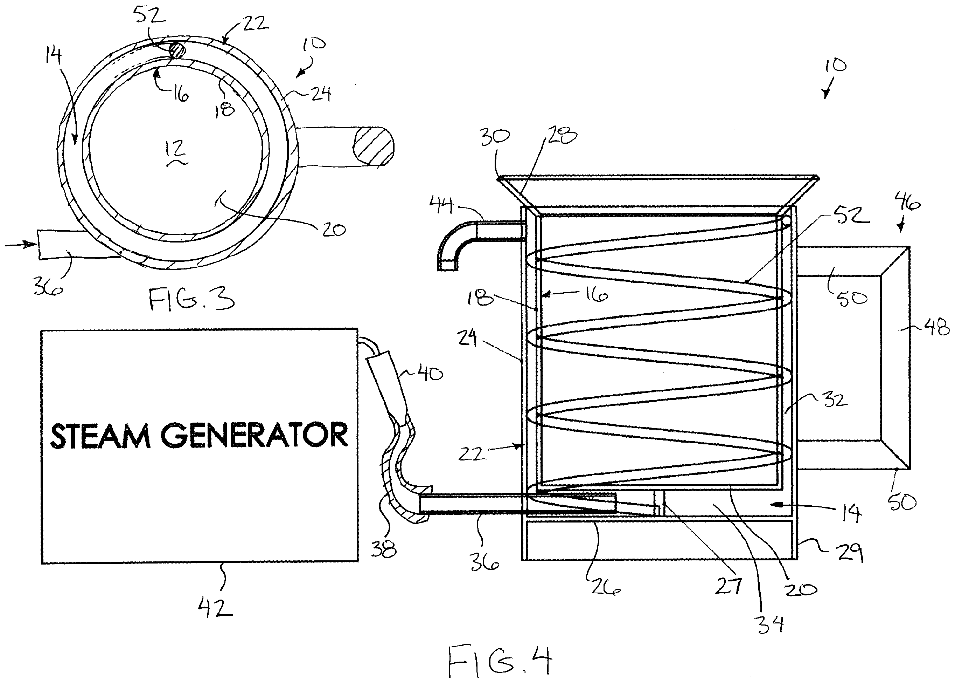

Figure 3 is a horizontal cross section of the coffee brewing vessel according to Figure 1; and
Figure 4 is a schematic representation of the coffee brewing vessel according to Figure 1, shown in use with a steam generating appliance.

In the drawings like characters of reference indicate corresponding parts in the different figures.

### DETAILED DESCRIPTION

Referring to the accompanying figures, there is illustrated a coffee brewing vessel generally indicated by reference numeral 10. The vessel defines an inner receptacle 12 therein for receiving a coffee mixture of ground coffee and water to be heated therein and a surrounding steam chamber for receiving steam therein to heat the coffee mixture in the receptacle.

The vessel 10 includes an inner wall 16 having a side wall portion 18 which is a cylindrical sleeve-like structure, and a bottom wall portion 20 which is horizontal and circular so as to span and enclose a bottom side of the side wall portion. The receptacle 12 formed by the side wall portion 18 and the bottom wall portion 20 remains open at the top end thereof.

The vessel 10 further includes an outer wall 22 which similarly includes a side wall portion 24 and a bottom wall portion 26. The side wall portion 24 of the outer wall is again generally cylindrical in shape and is larger in diameter than the corresponding side wall portion of the inner wall so as to surround the inner wall and define an annular space therebetween by mounting the inner wall concentrically within the side wall portion of the outer wall. The bottom wall portion 26 of the outer wall is a horizontal, circular wall, and is mounted to span the bottom end of the side wall portion 24 at a location spaced below the bottom wall portion of the inner wall. A support post 27 is mounted to span the vertical space between the inner bottom wall portion 20 and the outer bottom wall portion 26 for added structure support.

The outer wall 22 further includes a lower extension wall portion 29 which is in the form of a collar extending downwardly from a periphery of the bottom wall portion 26 so as to be flush mounted at the outer surface thereof with the outer surface of the outer side wall portion 24. The bottom end of the lower extension wall portion 29 defines the bottom end of the vessel for supporting the bottom wall portion of the inner and outer walls spaced above a suitable supporting surface upon which the vessel is supported in use. A resulting cavity surrounded by the lower extension wall portion 29 provides a heat insulating space between the steam chamber thereabove and the supporting surface upon which the vessel is supported.

The vessel 10 further includes a top wall 28 which is generally frusto-conical in shape and serves to connect between the top end of the inner side wall portion 18 and the top end of the outer side wall portion 24. More particularly, the top wall 28 is an annular flange extending upwardly and radially outwardly from the circular top edge of the inner side wall portion 18 to an outer perimeter edge 30 which is greater in diameter than the outer side wall portion 24 such that the top end of the outer side wall portion 24 terminates at an intermediate location along the bottom surface of the top wall 28.

The steam chamber 14 defined between the inner and outer walls thus includes an annular portion 32 which extends about the full circumference of the inner wall and spans the full height of the receptacle defined therein, as well as a bottom portion 34 which spans horizontally across the bottom of the receptacle in communication with the annular portion 32 extending upward from the periphery thereof. The bottom portion 34 locates the support post 27 therein.

A steam inlet tube 36 communicates through the outer side wall portion 24 adjacent to the bottom end of the steam chamber so as to be in alignment with the bottom portion 34 thereof. An external portion of the steam inlet tube 36 is adapted for connection to an adapter tube 38 which provides a releasable connection between the steam inlet tube 36 of the vessel 10 and the steam outlet 40 of an auxiliary coffee appliance 42.

In the preferred embodiment, the auxiliary coffee appliance comprises a separate appliance of the type typically used for steaming milk in the making of cappuccinos and lattes for example. The adapter tube 38 comprises any suitable tubular member having a first end adapted for releasable connection to the steam outlet 40 of the coffee appliance in sealed connection therewith and a second end adapted for releasable and sealed connection with exterior portion of the steam inlet tube 36.

The vessel 10 further includes a steam outlet tube 44 which communicates through the outer side wall portion 24 of the outer wall adjacent the top end of the steam chamber 14. The steam outlet tube 44 is located directly above the steam inlet tube 36 in a common first side of the receptacle. An exterior portion of the steam outlet tube 44 has a first portion extending radially outward relative to the outer side wall portion 24 of the outer wall and a second portion which defines an exhaust opening at the free end thereof which is directed downwardly.

In this manner, steam is introduced to the steam chamber 14 through the steam inlet tube 36 to be circulated through both the bottom portion 34 and the annular portion 32 of the steam chamber prior to being exhausted through the steam outlet tube 44 which directs the exhausted steam downwardly and way from the hands of a user.

The vessel 10 further includes a handle member 46 mounted externally on the outer side wall portion 24 of the outer wall 22 at a second side of the receptacle so as to be diametrically opposite from the first side locating the steam inlet tube and the steam outlet tube therein. The handle member 46 comprises a gripping portion which is vertically oriented at a location spaced radially outward from the outer wall 22 of the vessel so as to be suitable for gripping in the hand of a user, and two arm portions 50 connected radially between the outer side wall portion of the outer wall 22 and the gripping portion 48 at respective opposing top and bottom ends of the gripping portions.

A helical member 52 in the form of a rigid wire having an outer diameter corresponding approximately to the radial dimension of the annular portion of the steam chamber is mounted within the steam chamber to direct steam in a helical path through the annular portion 32 of the steam chamber from the steam inlet tube 36 at the bottom end to the steam outlet tube 44 at the top end thereof. More particularly, the helical member is mounted concentrically between the inner and outer side wall portions with the thickness of the member spanning the full radial dimension of the annular portion of the steam chamber. In this manner, the helical member forms a baffle which separates the annular portion 32 of the steam chamber into a helical shaped path communicating between the bottom portion 34 and a top end of the steam chamber with which the steam outlet tube communicates.

The coffee brewing appliance is used for brewing coffee by placing a coffee mixture comprised of ground coffee and water in the receptacle through the open top end thereof. The steam inlet tube 36 is connected to the steam outlet of an auxiliary coffee appliance using the adapter tube 38.

An operator manually operates the steam function of the coffee appliance to direct steam into the steam chamber through the steam inlet tube for circulation along the helical path defined by the helical member 52 to subsequently exhaust the steam downwardly through the exhaust opening of the steam outlet tube at the top end of the vessel. Steam is continued to be circulated through the steam chamber until the coffee mixture is heated to a sufficient temperature and for a sufficient duration to adequately brew the coffee mixture into a resulting coffee beverage having a desirable flavor for the user.

Since various modifications can be made in my invention as herein above described, it is intended that all matter contained in the accompanying specification shall be interpreted as illustrative only and not in a limiting sense.

## Claims

1. A coffee brewing vessel (10) for use with a steam generating appliance, the vessel (10) comprising:
an inner wall (16) shaped to define a receptacle (12) for receiving a coffee mixture therein;
an outer wall (22) surrounding at least a portion of the inner wall (16) so as to define a steam chamber (14) between the inner wall (16) and the outer wall (22);
a steam inlet (36) in communication with the steam chamber (14) and being arranged to receive steam from the steam generating appliance; and
a steam outlet (44) in communication with the steam chamber (14) so as to be arranged to exhaust the steam externally of the vessel (10),
the steam chamber (14) being enclosed between the inner wall (16) and the outer wall (22) such that the steam introduced through the steam inlet (36) is exhausted through the steam outlet (44) subsequent to being circulated through the steam chamber (14).

2. The coffee brewing vessel (10) according to Claim 1 wherein the steam chamber (14) includes an annular portion (32) which extends about a full circumference of the receptacle (12).

3. The coffee brewing vessel (10) according to either one of Claims 1 or 2 wherein the steam chamber (14) includes a bottom portion (34) which spans a bottom side of the receptacle (12).

4. The coffee brewing vessel (10) according to any one of Claims 1 through 3 wherein the steam chamber (14) spans substantially a full height of the receptacle (12).

5. The coffee brewing vessel (10) according to any one of Claims 1 through 4 wherein the inner wall (16) includes a side wall portion (18) which is generally cylindrical and a bottom wall portion (20) spanning a bottom side of the side wall portion (18).

6. The coffee brewing vessel (10) according to any one of Claims 1 through 5 wherein the outer wall (22) includes a side wall portion (24) which is generally cylindrical and a bottom wall portion (20) spanning a bottom side of the side wall portion (18).

7. The coffee brewing vessel (10) according to any one of Claims 1 through 6 wherein the steam chamber (14) defines a generally helical path between the steam inlet (36) and the steam outlet (44).

8. The coffee brewing vessel (10) according to Claim 7 further comprising a helical member (52) supported between the inner wall (16) and the outer wall (22) so as to define the generally helical path.

9. The coffee brewing vessel (10) according to any one of Claims 1 through 8 wherein the steam inlet (36) and the steam outlet (44) communicate with the steam chamber (14) at opposing locations relative to one another.

10. The coffee brewing vessel (10) according to any one of Claims 1 through 9 wherein the steam inlet (36) and the steam outlet (44) communicate with the steam chamber (14) at opposing top and bottom ends of the steam chamber (14) respectively.

11. The coffee brewing vessel (10) according to Claim 10 wherein the steam inlet (36) communicates with the steam chamber (14) adjacent to the bottom end thereof and the steam outlet (44) communicates with the steam chamber (14) adjacent to the top end thereof.

12. The coffee brewing vessel (10) according to any one of Claims 1 through 11 wherein the steam outlet (44) comprises a tubular member having an exhaust opening which is directed downwardly.

13. The coffee brewing vessel (10) according to any one of Claims 1 through 12 wherein the steam inlet (36) and the steam outlet (44) communicate with the steam chamber (14) at a first side of the receptacle (12) and wherein there is provided a handle (46) supported on the outer wall (22) at a second side of the receptacle (12) which is diametrically opposite from the first side.

14. The coffee brewing vessel (10) according to any one of Claims 1 through 13 in combination with an auxiliary coffee making appliance having a steam outlet, and an adapter which is adapted for releasable connection in communication between the steam outlet of the auxiliary coffee making appliance and the steam inlet (36) of the coffee brewing vessel (10).

15. A method of brewing coffee comprising:
providing a brewing vessel (10) having an inner wall (16) shaped to define a receptacle (12) for receiving a coffee mixture therein, an outer wall (22) surrounding at least a portion of the inner wall (16) so as to define an enclosed steam chamber (14) between the inner wall (16) and the outer wall (22), a steam inlet (36) in communication with the steam chamber (14), and a steam outlet in communication with the steam chamber (14);
placing a coffee mixture in the receptacle (12) of the brewing vessel (10);
heating the coffee mixture in the receptacle (12) of the brewing vessel (10) by introducing steam into the steam inlet (36) and exhausting the steam through the steam outlet (44) subsequent to circulating the steam through the steam chamber (14).

## Patentansprüche

1. Kaffeebrühgefäß (10) zur Verwendung mit einer Dampferzeugungsvorrichtung, wobei das Gefäß (10) umfasst:
eine Innenwand (16), welche so geformt ist, dass sie einen Behälter (12) zum Aufnehmen einer Kaffeemischung definiert;
eine Außenwand (22), welche mindestens einen Teil der Innenwand (16) umgibt, um eine Dampfkammer (14) zwischen der Innenwand (16) und der Außenwand (22) zu definieren;
einen mit der Dampfkammer (14) in Verbindung stehenden Dampfeinlass (36), welcher dazu eingerichtet ist, Dampf aus der Dampferzeugungsvorrichtung aufzunehmen; und
einen in Verbindung mit der Dampfkammer (14) stehenden Dampfauslass (44), welcher dazu eingerichtet ist, den Dampf außerhalb des Gefäßes (10) abzulassen,
wobei die Dampfkammer (14) zwischen der Innenwand (16) und der Außenwand (22) eingeschlossen ist, so dass der durch den Dampfeinlass (36) eingebrachte Dampf durch den Dampfauslass (44) ausgestoßen wird, nachdem er in der Dampfkammer (14) zirkuliert wurde.

2. Kaffeebrühgefäß (10) gemäß Anspruch 1, wobei die Dampfkammer (14) einen ringförmigen Abschnitt (32) aufweist, welcher sich über einen vollen Umfang des Behälters (12) erstreckt.

3. Kaffeebrühgefäß (10) gemäß einem der Ansprüche 1 oder 2, wobei die Dampfkammer (14) einen Bodenabschnitt (34) aufweist, welcher eine Unterseite des Behälters (12) überspannt.

4. Kaffeebrühgefäß (10) gemäß einem der Ansprüche 1 bis 3, wobei die Dampfkammer (14) im Wesentlichen eine volle Höhe des Behälters (12) überspannt.

5. Kaffeebrühgefäß (10) gemäß einem der Ansprüche 1 bis 4, wobei die Innenwand (16) einen im Allgemeinen zylindrischen Seitenwandabschnitt (18) und einen eine Unterseite des Seitenwandabschnitts (18) überspannenden Bodenwandabschnitt (20) aufweist.

6. Kaffeebrühgefäß (10) gemäß einem der Ansprüche 1 bis 5, wobei die Außenwand (22) einen im Allgemeinen zylindrischen Seitenwandabschnitt (24) und einen eine Unterseite des Seitenwandabschnitts (18) überspannenden Bodenwandabschnitt (20) aufweist.

7. Kaffeebrühgefäß (10) gemäß einem der Ansprüche 1 bis 6, wobei die Dampfkammer (14) einen im Allgemeinen schraubenförmigen Weg zwischen dem Dampfeinlass (36) und dem Dampfauslass (44) definiert.

8. Kaffeebrühgefäß (10) gemäß Anspruch 7, ferner umfassend ein schraubenförmiges Element (52), das zwischen der Innenwand (16) und der Außenwand (22) gelagert ist, um den im Allgemeinen spiralförmigen Weg zu definieren.

9. Kaffeebrühgefäß (10) gemäß einem der Ansprüche 1 bis 8, wobei der Dampfeinlass (36) und der Dampfauslass (44) relativ zueinander an gegenüberliegenden Stellen mit der Dampfkammer (14) in Verbindung stehen.

10. Kaffeebrühgefäß (10) gemäß einem der Ansprüche 1 bis 9, wobei der Dampfeinlass (36) und der Dampfauslass (44) mit der Dampfkammer (14) jeweils an gegenüberliegenden oberen und unteren Enden der Dampfkammer (14) in Verbindung stehen.

11. Kaffeebrühgefäß (10) gemäß Anspruch 10, wobei der Dampfeinlass (36) mit der Dampfkammer (14) benachbart zu deren Bodenende in Verbindung steht und der Dampfauslass (44) mit der Dampfkammer (14) benachbart zu deren oberem Ende in Verbindung steht.

12. Kaffeebrühgefäß (10) gemäß einem der Ansprüche 1 bis 11, wobei der Dampfauslass (44) ein rohrförmiges Element mit einer nach unten gerichteten Auslassöffnung umfasst.

13. Kaffeebrühgefäß (10) gemäß einem der Ansprüche 1 bis 12, wobei der Dampfeinlass (36) und der Dampfauslass (44) an einer ersten Seite des Behälters (12) mit der Dampfkammer (14) in Verbindung stehen, und wobei ein an der Außenwand (22) gelagerter Griff (46) an einer der ersten Seite diametral gegenüberliegenden, zweiten Seite des Behälters (12) bereitgestellt ist.

14. Kaffeebrühgefäß (10) gemäß einem der Ansprüche 1 bis 13 in Kombination mit einer zusätzlichen Kaffeemaschine mit einem Dampfauslass, und in Kombination mit einem Adapter, welcher für einen lösbaren Anschluss der Verbindung zwischen dem Dampfauslass der zusätzlichen Kaffeemaschine und dem Dampfeinlass (36) des Kaffeebrühgefäßes (10) eingerichtet ist.

15. Verfahren zum Brühen von Kaffee, umfassend:
Bereitstellen eines Brühgefäßes (10) mit einer Innenwand (16), welche so geformt ist, dass sie einen Behälter (12) zum Aufnehmen einer Kaffeemischung darin definiert, und mit einer Außenwand (22), welche mindestens einen Teil Innenwand (16) umgibt, um zwischen der Innenwand (16) und der Außenwand (22) eine umschlossene Dampfkammer (14) zu definieren, und mit einem Dampfeinlass (36) in Verbindung mit der Dampfkammer (14) und mit einem Dampfauslass in Verbindung mit der Dampfkammer (14);
Einfüllen einer Kaffeemischung in den Behälter (12) des Brühgefäßes (10);
Erwärmen der Kaffeemischung in dem Behälter (12) des Brühgefäßes (10) durch Einleiten von Dampf in den Dampfeinlass (36) und Ablassen des Dampfes aus dem Dampfauslass (44) nach dem Zirkulieren des Dampfes in der Dampfkammer (14).

## Revendications

1. Récipient d'infusion de café (10), destiné à être utilisé avec un appareil de génération de vapeur, ledit récipient (10) comprenant :
une paroi intérieure (16) formée de manière à définir un réceptacle (12) destiné à contenir un mélange de café ;
une paroi extérieure (22) entourant au moins une partie de la paroi intérieure (16) de manière à définir une chambre à vapeur (14) entre la paroi intérieure (16) et la paroi extérieure (22) ;
une entrée de vapeur (36) en communication avec la chambre à vapeur (14) et prévue pour recevoir de la vapeur de l'appareil de génération de vapeur ; et une sortie de vapeur (44) en communication avec la chambre à vapeur (14) de manière à être apte à évacuer la vapeur vers l'extérieur du récipient (10), la chambre à vapeur (14) étant intercalée entre la paroi intérieure (16) et la paroi extérieure (22) de sorte que la vapeur introduite par l'entrée de vapeur (36) est évacuée par la sortie de vapeur (44) après avoir circulé dans la chambre à vapeur (14).

2. Récipient d'infusion de café (10) selon la revendication 1, où la chambre à vapeur (14) présente une partie annulaire (32) qui s'étend sur toute la circonférence du réceptacle (12).

3. Récipient d'infusion de café (10) selon la revendication 1 ou la revendication 2, où la chambre à vapeur (14) présente une partie inférieure (34) s'étend sur un côté de fond du réceptacle (12).

4. Récipient d'infusion de café (10) selon l'une des revendications 1 à 3, où la chambre à vapeur (14) s'étend sensiblement sur toute la hauteur du réceptacle (12).

5. Récipient d'infusion de café (10) selon l'une des revendications 1 à 4, où la paroi intérieure (16) présente une partie de paroi latérale (18) sensiblement cylindrique et une partie de paroi inférieure (20) s'étendant sur un côté de fond de la partie de paroi latérale (18).

6. Récipient d'infusion de café (10) selon l'une des revendications 1 à 5, où la paroi extérieure (22) présente une partie de paroi latérale (24) sensiblement cylindrique et une partie de paroi inférieure (20) s'étendant sur un côté de fond de la partie de paroi latérale (18).

7. Récipient d'infusion de café (10) selon l'une des revendications 1 à 6, où la chambre à vapeur (14) définit un chemin sensiblement hélicoïdal entre l'entrée de vapeur (36) et la sortie de vapeur (44).

8. Récipient d'infusion de café (10) selon la revendication 7, comprenant en outre un élément hélicoïdal (52) supporté entre la paroi intérieure (16) et la paroi extérieure (22) de manière à définir le chemin sensiblement hélicoïdal.

9. Récipient d'infusion de café (10) selon l'une des revendications 1 à 8, où l'entrée de vapeur (36) et la sortie de vapeur (44) communiquent avec la chambre à vapeur (14) à des emplacements opposés l'un à l'autre.

10. Récipient d'infusion de café (10) selon l'une des revendications 1 à 9, où l'entrée de vapeur (36) et la sortie de vapeur (44) communiquent avec la chambre à vapeur (14) respectivement à l'extrémité supérieure et à l'extrémité inférieure opposée de la chambre à vapeur (14).

11. Récipient d'infusion de café (10) selon la revendication 10, où l'entrée de vapeur (36) communique avec la chambre à vapeur (14) adjacente, à l'extrémité inférieure de celle-ci et la sortie de vapeur (44) communique avec la chambre à vapeur (14) adjacente, à l'extrémité supérieure de celle-ci.

12. Récipient d'infusion de café (10) selon l'une des revendications 1 à 11, où la sortie de vapeur (44) présente un élément tubulaire ayant une ouverture d'évacuation dirigée vers le bas.

13. Récipient d'infusion de café (10) selon l'une des revendications 1 à 12, où l'entrée de vapeur (36) et la sortie de vapeur (44) communiquent avec la chambre à vapeur (14) sur un premier côté du réceptacle (12) et où une poignée (46) est prévue, supportée sur la paroi extérieure (22) sur un deuxième côté du réceptacle (12) diamétralement opposé au premier côté.

14. Récipient d'infusion de café (10) selon l'une des revendications 1 à 13, en combinaison avec un appareil à café auxiliaire présentant une sortie de vapeur, et un adaptateur prévu pour une connexion amovible en communication entre la sortie de vapeur de l'appareil à café auxiliaire et l'entrée de vapeur (36) du récipient d'infusion de café (10).

15. Procédé d'infusion de café, comprenant :
la préparation d'un récipient d'infusion (10) comprenant une paroi intérieure (16) formée de manière à définir un réceptacle (12) destiné à contenir un mélange de café, une paroi extérieure (22) entourant au moins une partie de la paroi intérieure (16) de manière à définir une chambre à vapeur (14) entre la paroi intérieure (16) et la paroi extérieure (22), une entrée de vapeur (36) en communication avec la chambre à vapeur (14), et une sortie de vapeur en communication avec la chambre à vapeur (14) ;
le dépôt d'un mélange de café dans le réceptacle (12) du récipient d'infusion (10) ; le chauffage du mélange de café dans le réceptacle (12) du récipient d'infusion (10) par introduction de vapeur par l'entrée de vapeur (36) et l'évacuation de la vapeur par la sortie de vapeur (44) après avoir circulé dans la chambre à vapeur (14).
